# EUROPÄISCHE PATENTSCHRIFT

(11) **EP 2 734 365 B1**
(45) Veröffentlichungstag und Bekanntmachung des Hinweises auf die Patenterteilung: **16.09.2015**
(21) Anmeldenummer: 12740482.0
(22) Anmeldetag: 06.07.2012
(51) Int. Cl.: B32B 27/32, B32B 27/30, B32B 7/06, E04D 5/10, E04D 5/06

(54) **EINE MEHRSCHICHTFOLIE MIT HOHER WEITERREISSFESTIGKEIT UND GERINGEM SCHRUMPF**
A MULTILAYER FILM WITH HIGH TEAR PROPAGATION RESISTANCE AND LOW SHRINKAGE
FEUILLE MULTICOUCHE AYANT UNE RÉSISTANCE ACCRUE À LA POURSUITE DU DÉCHIREMENT ET UNE RÉTRACTION FAIBLE

(30) Priorität: 20.07.2011 DE 102011107946
(43) Veröffentlichungstag der Anmeldung: 28.05.2014
(73) Patentinhaber: Infiana Germany GmbH & Co. KG, 91301 Forchheim (DE)
(72) Erfinder: ENGELHARD, Heinz, 90427 Nürnberg (DE)
(74) Vertreter: Kutzenberger, Helga
(86) Internationale Anmeldenummer: PCT/EP2012/002857
(87) Internationale Veröffentlichungsnummer: WO 2013/010639

(56) Entgegenhaltungen:
- WO-A1-2011/063914
- WO-A1-2011/069680
- JP-A- 3 013 338
- US-A- 6 042 930

## Beschreibung

Die vorliegende Erfindung betrifft eine Mehrschichtfolie mit einer Weiterreißfestigkeit von wenigstens 300mN gemessen an einer Gesamtdicke der Mehrschichtfolie von 45 µm und einem Schrumpfverhalten von ≤1% bei 120°C (sowohl in MD als auch in CD) mit Release-Eigenschaften umfassend eine Schicht (a), vorzugsweise als eine Oberflächenschicht, basierend auf wenigstens einem Propylen-Copolymer und ggf. wenigstens einem Olefin-Homopolymer, wenigstens eine innenliegende Schicht (b) basierend auf wenigstens einem Olefin/Alkyl (meth)acrylat-Copolymer, eine Schicht (c), vorzugsweise als die zweite Oberflächenschicht, basierend auf wenigstens einem Propylen-Copolymer und ggf. wenigstens einem Olefin-Homopolymer und ggf. jeweils eine zwischen der Schicht (a) und der Schicht (b) bzw. der Schicht (b) und der Schicht (c) angeordnete Haftvermittlerschicht (d) bzw. (e), deren Verwendung als entfembare Schutz- und/oder Trennfolie, wobei wenigstens eine der Oberflächenschichten der Mehrschichtfolie eine Release-Ausrüstung aufweist, eine eine solche Mehrschichtfolie umfassende Abdichtungsbahn sowie deren Verwendung zur Dachabdeckung.

Aus dem Stand der Technik ist eine Vielzahl von Mehrschichtfolien bekannt, welche sich für eine Vielzahl technischer Anwendungen eignen.

Für einige dieser technischen Anwendungen ist es jedoch erforderlich, dass sich die dafür eingesetzten Mehrschichtfolien durch eine Kombination ganz bestimmter mechanischer Eigenschaften auszeichnen. Dies gilt besonders für Mehrschichtfolien, die zur Herstellung von Abdichtungsbahnen, insbesondere Bitumen-Abdichtungsbahnen, verwendet werden.

Solche Bitumen-Abdichtungsbahnen werden beispielsweise als Dachabdeckungen eingesetzt.

Im Stand der Technik sind derartige Abdichtungsbahnen umfassend Mehrschichtfolien mit Releaseeigenschaften bereits bekannt.

So wird in WO 2011/063914 eine Trennfolie umfassend eine Schicht (s) mit einer Schaumstruktur basierend auf einem thermoplastischen Polymeren, vorzugsweise einem Olefin-Homo oder Copolymeren, beschrieben, wobei zumindest eine der Oberflächen der Trennfolie mit einer Releaseschicht (b) ausgerüstet ist. Außerdem weist die Trennfolie bevorzugt eine Schicht (a) und eine daran grenzende Schicht (c) auf, die beide vorzugsweise je auf einem Olefin-Homo-oder Copolymeren, wie beispielsweise auf einem Propylen-Copolymer, basieren können.

Nachteilig bei diesen Trennfolien und weiteren aus dem Stand der Technik bekannten, zur Herstellung von Abdichtungsbahnen verwendeten Mehrschichtfolien sind oftmals ungeeignete mechanische Eigenschaften wie eine nicht ausreichende Weiterreißfestigkeit. Insbesondere Mehrschichtfolien, die als Trenn- und Schutzfolien für Abdichtungsbahnen wie z.B. für Dachabdeckungen zum Einsatz kommen, müssen aber hohen mechanischen Anforderungen standhalten, da diese nicht nur bei der Lagerung und Handhabung am Bau, sondern insbesondere nach der passgenauen Aufbringung der Abdichtungsbahnen hohen mechanischen Belastungen standhalten müssen.

Dies gilt vor allem deshalb, weil die mit der Trenn- und Schutzfolie versehenen Abdichtungsbahnen zunächst ohne Entfernung der Schutz- und Trennfolie auf dem abzudeckenden Dach möglichst passgenau ausgelegt werden und anschließend die Trenn- und Schutzfolie jeweils unterhalb der Abdichtungsbahn, d.h. zwischen der Abdichtungsbahn und dem abzudeckendem Dach, herausgezogen werden müssen, bevor die Dachabdeckung mit dem Untergrund verklebt wird. Insbesondere bei dieser Entfernung der Trenn- und Schutzfolie von der klebefähigen oder selbstklebenden Abdichtungsbahn muss die Folie eine ausgezeichnete Reißfestigkeit und einen hohen Weiterreißwiderstand aufweisen, damit die Trenn- und Schutzfolie nicht während des Entfernens von der Abdichtungsbahn abreißt. Durch einen solchen Abriss kann es ggf. zu einer ungenügenden Verbindung der Abdichtungsbahn zum Untergrund, d.h. zu einer undichten Dachabdeckung kommen.

Darüber hinaus muss die zum Einsatz kommende Mehrschichtfolie als Trenn- und Schutzfolie, insbesondere für Dachabdeckungen, ein sehr geringes Schrumpfverhalten sowohl in Maschinenrichtung (MD), als auch quer zur Maschinenrichtung (CD) aufweisen, da bei der Herstellung von Abdichtungsbahnen für Dachabdeckungen, wie z.B. Bitumenbahnen, heiße Bitume mit der Trenn- und Schutzfolie in Kontakt gebracht wird. Durch diese Wärmeeinwirkung darf die Trennund Schutzfolie nicht schrumpfen, da sonst klebefähige oder selbstklebende Ränder der im Übrigen mit der Trenn- und Schutzfolie abgedeckten Abdichtungsbahn übrig bleiben, die eine Handhabung zur solcher Abdichtungsbahnen erschweren oder sogar unmöglich machen können.

Es besteht daher ein Bedarf an Mehrschichtfolien, bevorzugt an Mehrschicht-Blasfolien, besonders bevorzugt an coextrudierten Mehrschicht-Blasfolien, die nicht nur sehr gute Release-Eigenschaften zeigen, sondern auch ausgezeichnete mechanische Eigenschaften und praktisch keinen Schrumpf bei Temperatureinwirkung von bis zu 120 °C aufweisen.

Aufgabe der vorliegenden Erfindung war es daher, Mehrschichtfolien zur Verfügung zu stellen, die sich durch ausgezeichnete mechanische Eigenschaften, wie einer hohen Weiterreißfestigkeit sowie durch einen praktisch zu vernachlässigenden Schrumpf bei einer Wärmeeinwirkung bis zu 120 °C neben sehr guten Release-Eigenschaften auszeichnen und vorzugsweise nach der Blasfolien-Coextrusion hergestellt werden können.

Diese Aufgabe wird durch Bereitstellung einer Mehrschichtfolie mit einer Weiterreißfestigkeit von wenigstens 300 mN, gemessen an einer Gesamtdicke der Mehrschichtfolie von 45 µm, einem Schrumpfverhalten von ≤ 1 % bei 120 °C (sowohl in MD als auch in CD), und mit Release-Eigenschaften
umfassend
(a) eine Schicht, vorzugsweise als eine Oberflächenschicht, basierend auf wenigstens Propylen-Copolymer und ggf. wenigstens einem Olefin-Homopolymer
(b) wenigstens eine innenliegende Schicht basierend auf wenigstens einem Olefin/Acryl (meth)acrylat-Copolymeren
(c) eine Schicht, vorzugsweise als die zweite Oberflächenschicht, basierend auf wenigstens einem Propylem-Copolymer und ggf. wenigstens einem Olefin-Homopolymer und
   ggf. jeweils eine zwischen der Schicht (a) und der Schicht (b) bzw. der Schicht (b) und der Schicht (c) angeordnete Schicht (d) bzw. (e) als Haftvermittlerschicht
gelöst.

Vorzugsweise ist die erfindungsgemäße Mehrschichtfolie eine Mehrschicht-Blasfolie, die bevorzugt durch Extrusion, insbesondere durch Blasfolien-Coextrusion hergestellt wurde.

Vorzugsweise sind die Schichten (a) und (c) Oberflächenschichten der erfindungsgemäßen Mehrschichtfolie, wobei wenigstens eine der Oberflächenschichten eine Release-Ausrüstung aufweist.

Die Schicht (a), gleich oder verschieden von der Schicht (c) der erfindungsgemäßen Mehrschichtfolie, basiert auf wenigstens einem Propylen-Copolymer und ggf. auf wenigstens einem Olefin-Homopolymer, wie z.B. Polyethylen oder Polypropylen, vorzugsweise auf wenigstens einem Propylen-Copolymer.

Als Propylen-Copolymer der Schicht (a) bzw. (c) der erfindungsgemäßen Mehrschichtfolie eignet sich vorzugsweise wenigstens einem Copolymer aus Propylen und einem α,ß-ungesättigten Olefin mit vorzugsweise 2 bzw. 4-8 C-Atomen. Besonders bevorzugt umfasst die Schicht (a) bzw. (c) wenigstens ein Propylen-Copolymer aus der Gruppe umfassend Propylen-Ethylen-Copolymere, Propylen-Butylen-Copolymere, Propylen-Isobutylen-Copolymere und Mischungen aus wenigstens zwei der genannten Copolymere. Ganz besonders bevorzugt basiert die Schicht (a) bzw. (c) auf wenigstens ein Propylen-Ethylen-Copolymere mit vorzugsweise bis zu 15 Gew.-%, besonders bevorzugt 1 bis 10 Gew.-%, ganz besonders bevorzugt 5 bis 10 Gew.-%, jeweils bezogen auf das Gesamtgewicht des Propylen-Ethylen-Copolymer, Ethyleneinheiten.

Die Schicht (a) bzw. (c) der erfindungsgemäßen Mehrschichtfolie kann jeweils wenigstens ein Propylen-Homopolymer in einer Menge von bis zu höchstens 15 Gew.-%, bezogen auf das Gesamtgewicht der Schicht (a) bzw. (c), enthalten.

Vorzugsweise ist die Polymer-Komponente der Schicht (a) bzw. (c) ein Propylencopolymeres, besonders bevorzugt ein Propylen/Ethylen-Copolymeres.

Der Begriff "basierend auf" bedeutet erfindungsgemäß, dass der Anteil der damit definierten Polymerkomponenten "daraus besteht".

Die Schicht (c) ist vorzugsweise die zweite Oberflächenschicht der erfindungsgemäßen Mehrschichtfolie.

Die Schicht (a) bzw. die Schicht (c) der erfindungsgemäßen Mehrschichtfolie weist, jeweils unabhängig voneinander, vorzugsweise eine Schichtdicke von 5 µm bis 75 µm, besonders bevorzugt von 10 µm bis 50 µm, insbesondere bevorzugt von 15 µm bis 25 µm auf.

In einer bevorzugten Ausführungsform der erfindungsgemäßen Mehrschichtfolie weisen die Schicht (a) und die Schicht (c) einen identischen Schichtaufbau, vorzugsweise eine identische Schichtdicke und/oder eine identische Zusammensetzung der Polymer-Komponenten auf.

Die ggf. vorhandenen Haftvermittlerschichten (d) und (e), jeweils unabhängig voneinander, der erfindungsgemäßen Mehrschichtfolie basieren bevorzugt jeweils auf wenigstens einem modifizierten thermoplastischen Olefin-Homo-oder Copolymer.

Zur Herstellung der Haftvermittlerschichten (d) und (e) eignen sich vorzugsweise modifizierte thermoplastische Olefin-Homo- oder Copolymere von α,ß-ungesättigten Olefinen mit 2-10 C-Atomen wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Ein bevorzugtes thermoplastisches modifiziertes Olefin-Homo- oder Copolymer zur Herstellung der Haftvermittlerschichten (d) und (e) ist modifiziertes Propylen-Homopolymer. Vorzugsweise sind die thermoplastischen Olefin-Homo-oder Copolymere mit polaren Gruppen, vorzugsweise mit organischen SäureGruppen (Carboxyl-Gruppen) und/oder organischen Säureanhydrid-Gruppen, besonders bevorzugt Maleinsäureanhydrid-Gruppen modifiziert.

Die Haftvermittlerschichten (d) und (e) der erfindungsgemäßen Mehrschichtfolie weisen, jeweils unabhängig voneinander, vorzugsweise eine Schichtdicke von 1 µm bis 30 µm, besonders bevorzugt von 2 µm bis 25 µm, ganz besonders bevorzugt von 3 µm bis 20 µm, insbesondere von 4 µm bis 15 µm auf.

In einer bevorzugten Ausführungsform der erfindungsgemäßen Mehrschichtfolie weisen die Haftvermittlerschichten (d) und (e) einen identischen Schichtaufbau, vorzugsweise eine identische Schichtdicke und/oder identische Polymer Komponenten, auf.

Die erfindungsgemäße Mehrschichtfolie enthält wenigstens eine innenliegende Schicht (b) basierend auf einem Olefin/Alkyl(meth)acrylat-Copolymer.

Als solche Copolymere aus einem α,ß-ungesättigten Olefin und wenigstens einem weiteren α,ß-ungesättigten Monomeren mit wenigstens einer Ester-Gruppe, bevorzugt einer Alkyl(meth)acrylatgruppe, eignen sich wenigstens eine Verbindung ausgewählt aus der Gruppe umfassend Copolymere von C₁-C₆-Alkyl(meth)acrylaten, vorzugsweise Methyl(meth)acrylate, Ethyl(meth)acrylate, n- und Isopropyl(meth)acrylate, n- und Iso-Butyl(meth)acrylat, tert.-Butyl(meth)acrylat, 2-Ethylhexyl(meth)acrylate, Cyclohexyl(meth)acrylate und Isobomyl(meth)acrylate, besonders bevorzugt Butyl(meth)acrylate und α,ß-ungesättigten Olefinen mit vorzugsweise 1-8 C-Atomen, besonders bevorzugt Ethylen, Propylen.

Vorzugsweise liegt als Copolymeres ein Ethylen-C₁₋₄-Alkylacrylat-Copolymeres, besonders bevorzugt ein Ethylen-Butylacrylat-Copolymeres vor.

Die Schicht (b) weist eine Schichtdicke von 5 µm bis 100 µm, vorzugsweise 10 - 50 µm, ganz besonders bevorzugt von 15 µm bis 30 µm auf.

Die Schicht (a), die Schicht (b), die Schicht (c) sowie die ggf. vorhandenen Haftvermittlerschichten (d) und (e) können, wenn notwendig, jeweils unabhängig voneinander mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder LichtStabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein.

Die Schicht (a), die Schicht (b), die Schicht (c) sowie die ggf. vorhandenen Haftvermittlerschichten (d) und (e) können, jeweils unabhängig voneinander, wenigstens 0,01-30 Gew.-%, vorzugsweise wenigstens 0,1-20 Gew.-%, jeweils bezogen auf das Gesamtgewicht einer einzelnen Schicht, wenigstens eines der vorstehend genannten Additive enthalten. Dazu können die Additive in Form eines master batch in Polyolefinen oder Olefincopolymeren in die jeweilige Schicht eingearbeitet werden.

Die erfindungsgemäße Mehrschichtfolie weist vorzugsweise eine Gesamtschichtdicke von 15 µm bis 300 µm, besonders bevorzugt von 20 µm bis 100 µm, ganz besonders bevorzugt von 30 µm bis 60 µm auf.

Die erfindungsgemäße Mehrschichtfolie weist eine Weiterreißfestigkeit von wenigstens 300 mN gemäß dem Elmendorf-Verfahren (ISO 6383-2) bei einer Gesamtdicke der Mehrschichtfolie von 45 µm und einen Schrumpf nach DIN 53377 bei 1 min Verweilzeit im Ölbad mit 120 °C von ≤1% sowohl in Folien-Laufrichtung (MD), als auch quer zur Folien-Laufrichtung (CD) auf.

Um den notwendigen Release-Eigenschaften der erfindungsgemäßen Mehrschichtfolie gegenüber klebefähigen oder selbstklebenden Produkten, insbesondere Abdeckbahnen, insbesondere geeignet zur Dachabdeckung, zu erzielen, wird die erfindungsgemäße Mehrschichtfolie auf wenigstens einer ihrer Oberflächenschichten der Schicht (a) oder der Schicht (c), mit einer Release-Beschichtung ausgerüstet. Vorzugsweise basiert diese Release-Schicht auf wenigstens einem ausgehärteten Polysiloxan.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäß eingesetzte Polysiloxan eine vemetzte ring- oder kettenförmige, besonders bevorzugt eine vemetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die Releaseschicht basiert vorzugsweise auf wenigstens einem ausgehärteten, d.h. vernetzten Polysiloxan ausgewählt aus der Gruppe umfassend additionsvemetzte, vorzugsweise metallkatalysiert additionsvemetzte, kondensationsvemetzte, radikalisch vernetzte, kationisch vemetzte und/oder durch Feuchtigkeitseinwirkung vemetzte Polysiloxane.

Vorzugsweise basiert die Releaseschicht auf wenigstens einem ausgehärteten Polysiloxan, das durch thermische Aushärtung, durch Aushärtung mit elektromagnetischer Strahlung, vorzugsweise durch UV-Strahlung, oder durch Feuchtigkeitseinwirkung ausgehärtet wurde. Bevorzugt basiert die Releaseschicht der erfindungsgemäßen Mehrschichtfolie auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind.

Thermisch ausgehärtete Polysiloxane werden durch thermische Hydrosilylierung von Silan-Funktionen aufweisenden Polysiloxanen mit einer zumindest eine Kohlenstoff-Doppelbindung aufweisenden Verbindung erhalten. Bei den durch elektromagnetische Strahlung ausgehärteten Polysiloxanen ist die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Die auszuhärtenden Polysiloxane weisen daher jeweils die für die Vernetzung benötigten miteinander reagierenden funktionellen Gruppen auf.

Die Releaseschicht der erfindungsgemäßen Mehrschichtfolie weist vorzugsweise eine Schichtdicke von 0,1 µm bis ≤ 3 µm, vorzugsweise von 0,2 µm bis 1,5 µm auf.

Die erfindungsgemäße Mehrschichtfolie ist zumindest einseitig auf einer ihrer Oberflächen mit einer Releaseschicht ausgerüstet.

Zur Verbesserung der Trennwirkung von vorzugsweise mit ausgehärtetem Polysiloxan ausgerüsteten Mehrschichtfolien, insbesondere gegenüber stark klebenden Materialien, ist es zusätzlich möglich, die Mehrschichtfolie mit Releaseschicht mit einer Prägestruktur auszurüsten. Diese führt zu einer unebenen Oberflächenstruktur, die zu einer Verbesserung der Trennwirkung führen kann.

Darüber hinaus ist es auch möglich, eine solche unebene Oberflächenstruktur zu erzielen, um eine verbesserte Trennwirkung gegenüber Klebestoffen und/oder klebefähigen und/oder selbstklebenden Materialien, die bereits bei der Umgebungstemperatur eine große Klebekraft aufweisen, zu erzielen, indem man vorzugsweise in die Oberflächenschicht der erfindungsgemäßen Mehrschichtfolie, die mit einer Release-Beschichtung ausgerüstet ist, eine geschlossenzellige Schaumstruktur erzeugt. Vorzugsweise beruht die geschlossenzellige Schaumstruktur dieser Oberflächenschicht auf expandierten, hohlen Mikroteilchen, deren Expansion durch eine wenigstens in einem Hohlraum des Mikroteilchens enthaltenen, leicht flüchtigen organischen Verbindung bei der Herstellung der so dotierten Schicht erreicht wurde.

So kann in der erfindungsgemäßen Mehrschichtfolie die Schaumstruktur auf expandierten, vorzugsweise mindestens in der Schicht (a) oder (c) verteilten, hohlen Mikroteilchen, deren Wand (= Schale) vorzugsweise auf einem thermoplastischen Polymeren, besonders bevorzugt auf einem (Meth)acrylnitril-Homo- oder Copolymer basieren, deren Expansion mit Hilfe wenigstens einer leicht flüchtigen, organischen Verbindung, vorzugsweise einem leicht flüchtigen Kohlenwasserstoff, erzielt wurde. Die leicht flüchtige organische Verbindung weist vorzugsweise einen Siedepunkt ≤ 60°C bei Normaldruck, besonders bevorzugt ≤ 50°C bei Normaldruck auf. Die hohlen, expandierten Mikroteilchen sind vorzugsweise kugelförmig, und haben vorzugsweise einen Durchmesser von 30 µm bis 300 µm, besonders bevorzugt von 70 µm bis 200 µm. Vor der Expansion weisen die in ihren Hohlraum mit wenigstens einer leicht flüchtigen Verbindung gefüllten Mikroteilchen einen durchschnittlichen Durchmesser von 15 µm bis 30 µm auf. Vorzugsweise weist das thermoplastische Polymere der Schicht (a) oder (b) einen niedrigeren Schmelzpunkt auf als das thermoplastische Polymere aus dem die Wand (= Schale) der hohlen Mikroteilchen hergestellt wurde.

Zur Herstellung der Schaumstruktur in der Oberflächenschicht der erfindungsgemäßen Mehrschichtfolie werden vorzugsweise 0,1-10 Gew.-%, besonders bevorzugt 0,2-5 Gew.-%, jeweils bezogen auf das Gesamtgewicht dieser Schicht, von hohlen Mikroteilchen verteilt, die die leicht flüchtige, organische Verbindung enthalten.

Durch Wärmeeinwirkung bei der Herstellung der Oberflächenschicht erfolgt die Expansion der Mikroteilchen durch Verdampfung der leicht flüchtigen, organischen Verbindung. Vorzugsweise ist der Durchmesser der expandierten Mikroteilchen grösser als die Gesamtdicke der erfindungsgemäßen Mehrschichtfolie.

Vorzugsweise weist die Oberflächenschicht mit Schaumstrukturen eine Dichte von 0,2 bis 1,2 g/cm³, vorzugsweise von 0,5 bis 1,0 g/cm³ auf.

In einer bevorzugten Ausführungsform wird die erfindungsgemäße Mehrschichtfolie in Form einer Schlauchfolie produziert und nach einer Release-Beschichtung verarbeitet.

In einer weiteren Ausführungsform kann die erfindungsgemäße Mehrschichtfolie teilweise als Cast-Folie produziert und ggf. nach einer Release-Beschichtung verarbeitet werden.

Die Herstellung der einzelnen Schichten (a) - (c) mit ggf. (d) und (e) der erfindungsgemäßen Mehrschichtfolie erfolgt vorzugsweise durch Blasfolien-Co-Extrusion.

Die ggf. vorhandene Schaumstruktur der Schicht (a) als Oberflächenschicht wird mit Hilfe von in der Schicht (a) verteilten, hohlen Mikroteilchen, deren Schale aus einem thermoplastischen Polymer besteht und deren Füllung wenigstens eine leicht flüchtige, organische Verbindung ist, erzielt. Zur Ausbildung der Schaumstruktur werden die noch nicht expandierten Mikroteilchen in Form eines Masterbatches in das zu verschäumende, geschmolzene Polymere unter Wärmezufuhr, vorzugsweise bei einer Temperatur von 180 bis 240°C, eingearbeitet, wobei die Expansion der Mikroteilchen durch Expansion (Verflüchtigung) der darin enthaltenen, leicht flüchtigen, organischen Verbindungen eintritt. Bei beispielsweise einer Einarbeitung im Extruder liegen nach dem Austritt aus der Extruderdüse diese expandierten Mikroteilchen im Polymermaterial verteilt vor und ergeben so die geschlossenzellige Schaumstruktur.

Die so erhaltene Mehrschichtfolie kann wieder mit einer ausgehärteten Polysiloxanbeschichtung ausgerüstet werden.

Dadurch, dass die Schicht (a) oder (c) eine Schaumstruktur aufweist, wird vorteilhafterweise eine feste Verbindung der Release-Schicht auf der durch die Schaumstruktur strukturierten, unebenen, rauen Oberfläche der Schicht (a) oder (c) erreicht. Dadurch kann eine Prägung, wie bei der Herstellung bekannter Trennfolien mit glatter Oberfläche, der Release-Schicht nicht erforderlich sein. Die jeweiligen Herstellungsverfahren und entsprechende Produktionsparameter sind dem Fachmann allgemein bekannt.

Jede der Schichten (a) und (c) der erfindungsgemäßen Mehrschichtfolie kann einer Oberflächen-Behandlung wie z.B. einer Corona-Behandlung, einer PlasmaBehandlung und/oder einer Flamm-Behandlung unterworfen werden, vorzugsweise vor dem Aufbringen einer Release-Schicht, wobei besonders bevorzugt eine Corona-Behandlung durchgeführt wird.

Die erfindungsgemäße Mehrschichtfolie kann vorzugsweise bedruckt und/oder eingefärbt sein.

Die erfindungsgemäße Mehrschichtfolie mit Release-Eigenschaften wird vorzugsweise als entfembare Schutzfolie und/oder Trennfolie vorzugsweise für bereits bei Umgebungstemperatur eine große Klebkraft aufweisende Produkte verwendet.

Ein weiterer Gegenstand der vorliegenden Erfindung ist daher die Verwendung der erfindungsgemäßen Mehrschichtfolie mit einer Release-Ausrüstung als entfembare Schutz- oder Trennfolie vorzugsweise für klebende oder selbstklebende Etiketten, Klebebänder, Aufkleber, klebefähige oder selbstklebende Abdeckbahnen, vorzugsweise Dachbahnen, besonders bevorzugt für selbstklebende Bitumen-Dachbahnen.

Die erfindungsgemäße Mehrschichtfolie wird vorzugsweise bei der Herstellung von aufrollbaren, selbstklebenden Dachbahnen, vorzugsweise von aufrollbaren, selbstklebenden Bitumen-Dachbahnen als entfembare Schutz- und Trennfolie mitverarbeitet.

Ein weiterer Gegenstand der vorliegenden Erfindung ist daher eine vorzugsweise aufrollbare, selbstklebende Abdichtungsbahn, vorzugsweise Dachbahn, versehen mit einer erfindungsgemäßen Mehrschichtfolie als entfembare Schutz- und Trennfolie.

Ein weiterer Gegenstand der vorliegenden Erfindung ist eine aufgerollte, vorzugsweise selbstklebende Bitumen-Dachbahn versehen mit einer erfindungsgemäßen Mehrschichtfolie als entfembare Schutzfolie und/oder Trennfolie. Das nachfolgende Beispiel und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| Propylen-Copolymer: | Propylen-Ethylen-Copolymer (Ethylen-Anteil: 7-9%) der Firma Dow Chemicals |
| Batch 1: | Farb-Batch der Firma Schulman enthaltend ca. 50 Gew.-% Polyethylen als Polymer-Komponente |
| Ethylen-Butylacrylat-Copolymer: | Ethylen-Butylacrylat-Copolymer (Butylacrylat-Anteil ca. 17%) der Firma Lucobit |

### II. Herstellung der Mehrschichtfolien

Die Mehrschichtfolien der Vergleichsbeispiele **V1** und **V2** sowie des Beispiels **B1** bestehen jeweils aus drei Schichten und einer Polysiloxan-Beschichtung und weisen eine Gesamtschichtdicke von jeweils 45 µm auf. Die Schichtdicke der Schichten (a) und (c) beträgt jeweils 12 µm, die Schichtdicke der Schicht (b) 20 µm und die Dicke der Beschichtung 1 µm. Die einzelnen Schichten der Mehrschichtfolien grenzen jeweils in der Reihenfolge unmittelbar aneinander an, in der sie in der Tabelle 1 nachstehend aufgeführt sind. Die einzelnen Schichten (a), (b), (c) der Mehrschichtfolien der Vergleichsbeispiele **V1** und **V2** sowie des Beispiels **B1** wurden jeweils durch Blasfolien-Co-Extrusion hergestellt und jeweils eine Oberflächenschicht mit einer ausgehärteten Polysiloxan-Beschichtung mit einer Dicke von 1 µm ausgerüstet.

### III. Beispiel und Vergleichsbeispiele

Alle nachfolgenden %-Angaben sind jeweils Gew.-%.

**Tabelle 1**

| *Schichtaufbau* | *Rohstoffe **V1*** | *Rohstoffe **V2*** | *Rohstoffe **B1*** |
|---|---|---|---|
| Schicht (a) | Propylen-Copolymer (90%), Batch 1 (10%) | Ethylen-Butylacrylat-Copolymer (90%) Batch 1 (10%) | Propylen-Copolymer (90%), Batch 1 (10%), |
| Schicht (b) | Propylen-Copolymer (100%) | Ethylen-Butylacrylat-Copolymer (100%) | Ethylen-Butylacrylat-Copolymer (100%) |
| Schicht (c) | Propylen-Copolymer (90%), Batch 1 (10%), | Ethylen-Butylacrylat-Copolymer (90%) Batch 1 (10%) | Propylen-Copolymer (90%), Batch 1 (10%), |
| Beschichtung | ausgehärtetes Polysiloxan | ausgehärtetes Polysiloxan | ausgehärtetes Polysiloxan |

An der Mehrschichtfolie des Beispiels **B1** sowie der Vergleichsbeispiele **V1** und **V2** wurde jeweils nach der unten beschriebenen Methode die Weiterreißfestigkeit und das Schrumpfverhalten (bzw. die Maßänderung) bestimmt und in der Tabelle 2 angegeben. Für die Weiterreißfestigkeit sind die Werte in Laufrichtung (MD), für die Maßänderung die Werte sowohl in Laufrichtung (MD) als auch quer zur Laufrichtung (CD) angegeben.

**Tabelle 2**

| Beispiel/ Vergleichsbeispiel | Weiterreißfestigkeit | Schrumpfverhalten 120°C | Schrumpfverhalten 120°C |
|---|---|---|---|
| | [mN] | [%] MD | [%] CD |
| **V1** | ca. 100 | 0 bis -0,5 | 0 bis -0,5 |
| **V2** | > 800 | nicht messbar | nicht messbar |
| **B1** | ca. 500 | 0 bis -0,5 | 0 bis -0,5 |

### Bestimmung der Weiterreißfestigkeit

Die Weiterreißfestigkeit wird nach ISO 6383-2 bestimmt und als Weiterreißkraft gemessen bei einer Mehrschichtfolie mit einer Gesamtdicke von 45 µm und in [mN] angegeben.

### Bestimmung des Schrumpfverhaltens (Maßänderung)

Die Maßänderung wird nach DIN 53377 bei 1 min Verweilzeit im Ölbad mit 120 °C bestimmt und als prozentuale Veränderung in Laufrichtung (MD) sowie quer zur Laufrichtung (CD) angegeben.

## Patentansprüche

1. Eine Mehrschichtfolie mit einer Weiterreißfestigkeit von wenigstens 300mN gemessen nach dem Elmendorf-Verfahren (ISO 6383-2) bei einer Gesamtdicke der Mehrschichtfolie von 45 µm und einem Schrumpfverhalten von ≤1% nach DIN 53377 bei 1 min Verweilzeit im Ölbad mit 120°C (sowohl in MD als auch in CD) mit Release-Eigenschaften umfassend
(a) eine Schicht als eine Oberflächenschicht, basierend auf wenigstens Propylen-Copolymer und ggf. wenigstens einem Olefin-Homopolymer
(b) wenigstens eine innenliegende Schicht basierend auf wenigstens einem Olefin/Alkyl (meth)acrylat-Copolymeren
(c) eine Schicht als die zweite Oberflächenschicht, basierend auf wenigstens einem Propylen-Copolymer und ggf. wenigstens einem Olefin-Homopolymer und
ggf. jeweils eine Schicht (d) bzw. (e) angeordnet zwischen der Schicht (a) und der Schicht (b) bzw. der Schicht (b) und der Schicht (c) als Haftvermittlerschicht,
**dadurch gekennzeichnet, dass** wenigstens eine der Oberflächenschichten der Mehrschichtfolie eine Release-Ausrüstung aufweist.

2. Eine Mehrschichtfolie nach Anspruch 1, **dadurch gekennzeichnet, dass** die Schicht (a) und die Schicht (c) einen identischen Schichtaufbau, vorzugsweise eine identische Schichtdicke und/oder eine identische Zusammensetzung der Polymerkomponenten ausweist.

3. Eine Mehrschichtfolie nach Anspruch 1 oder 2, **dadurch gekennzeichnet, dass** die Schicht (a) und die Schicht (c), gleich oder verschieden voneinander, wenigstens ein Copolymer aus Propylen und einem α,β-ungesättigten Olefin mit vorzugsweise 2 bzw. 4 - 8 C-Atomen, vorzugsweise wenigstens ein Ethylen-Propylen-Copolymer aufweisen.

4. Eine Mehrschichtfolie nach einem der Ansprüche 1 bis 3, **dadurch gekennzeichnet, dass** die Schicht (a) bzw. (c) auf wenigstens einem Propylen-Ethylen-Copolymer, mit höchstens 15 Gew.-%, vorzugsweise 1 bis 10 Gew.-%, besonders bevorzugt 5 bis 10 Gew.-%, jeweils bezogen auf das Gesamtgewicht des Propylen/Ethylen-Copolymers, Ethyleneinheiten aufweisen.

5. Eine Mehrschichtfolie nach einem der Ansprüche 1 bis 4, **dadurch gekennzeichnet, dass** die Schicht (a) bzw. (c) höchstens 15 Gew.-%, bezogen auf das Gesamtgewicht der jeweiligen Schicht (a) bzw. (c), von wenigstens einem Propylen-Homopolymeren oder Ethylen-Homopolymeren aufweist, wobei sich die Polymerkomponenten der Schicht (a) bzw. (c) jeweils immer auf 100 Gew.-% addieren müssen.

6. Eine Mehrschichtfolie nach einem der Ansprüche 1 bis 5, **dadurch gekennzeichnet, dass** die Schicht (b) auf wenigstens einem α,β-ungesättigten Olefin mit 1 - 8 C-Atomen- und einem C₁-C₆-Alkyl(meth)acrylat, vorzugsweise auf wenigstens einem Ethylen/Ethyl(meth)acrylat-Copolymeren, einem Ethylen/Propyl(meth)acrylat-Copolymeren, einem Ethylen/Butyl(meth)acrylat-Copolymeren, besonders bevorzugt auf einem Ethylen/Butylacrylat-Copolymeren basiert.

7. Eine Mehrschichtfolie nach einem der Ansprüche 1 bis 6, **dadurch gekennzeichnet, dass** die Schicht (d) bzw. (e) auf jeweils wenigstens einem modifizierten, thermoplastischen Olefin-Homo- oder Copolymer basiert.

8. Eine Mehrschichtfolie nach einem der Ansprüche 1 bis 7, **dadurch gekennzeichnet, dass** sie nach einem Blasfolien-Co-Extensionsverfahren hergestellt wurde.

9. Eine Mehrschichtfolie nach einem der Ansprüche 1 bis 8, **dadurch gekennzeichnet, dass** wenigstens eine Oberflächenschicht der Mehrschichtfolie als Release-Ausrüstung eine ausgehärtete Polysiloxan-Beschichtung mit vorzugsweise einer geprägten Oberflächentopographie oder vorzugsweise einer nicht geprägten, unebenen Oberflächenstruktur durch Verschäumung aufweist.

10. Eine Verwendung einer Mehrschichtfolie nach einem der Ansprüche 1 bis 9 als entfembare Trenn- und/oder Schutzfolie.

11. Eine entfembare Trenn- und/oder Schutzfolie nach einem der Ansprüche 1 - 9 für klebefähige oder selbstklebende Produkte.

12. Eine entfernbare Trenn- und/oder Schutzfolie nach Anspruch 11, **dadurch gekennzeichnet, dass** das Produkt eine Abdichtungsmasse, ein Klebeband oder Etikett ist.

13. Eine entfernbare Trenn- und/oder Schutzfolie nach Anspruch 11 oder 12, **dadurch gekennzeichnet, dass** die Abdichtungsmasse eine Bitumenmasse für eine Abdichtungsbahn, vorzugsweise zur Dachabdeckung, ist.

14. Eine Abdichtungsbahn, vorzugsweise eine Bitumenabdichtungsbahn mit einer Mehrschichtfolie nach einem der Ansprüche 1 bis 9 als entfernbare Trenn-und/oder Schutzfolie.

## Claims

1. A multilayer film with a tear propagation resistance of at least 300 mN measured by the Elmendorf method (ISO 6383-2) on a multilayer film of total thickness 45 µm and with <1% shrinkage in accordance with DIN 53377 for 1 min of residence time in the oil bath at 120°C (in both MD and CD) with release properties comprising
(a) a layer, as a surface layer, based on at least propylene copolymer and optionally on at least one olefin homopolymer
(b) at least one internal layer based on at least one olefin/alkyl (meth)acrylate copolymer
(c) a layer, as the second surface layer, based on at least one propylene copolymer and optionally on at least one olefin homopolymer and
optionally a layer (d) respectively layer (e) arranged between the layer (a) and the layer (b) respectively between the layer (b) and the layer (c) as adhesion-promoter layer,
**characterized in that** at least one of the surface layers of the multilayer film is provided with release properties.

2. The multilayer film as claimed in claim 1, **characterized in that** the layer (a) and the layer (c) have an identical layer structure, preferably an identical layer thickness and/or an identical composition of the polymer components.

3. The multilayer film as claimed in claim 1 or 2, **characterized in that** the layer (a) and the layer (c), being identical or different from each other, comprise at least one copolymer of propylene and of an α,β-unsaturated olefin preferably having 2 or from 4 to 8 carbon atoms, preferably at least one ethylene-propylene copolymer.

4. The multilayer film as claimed in any one of claims 1 to 3, **characterized in that** the layer (a) respectively layer (c) is based on at least one propylene-ethylene copolymer having at most 15% by weight, preferably from 1 to 10% by weight, particularly preferably from 5 to 10% by weight, based in each case on the total weight of the propylene/ethylene copolymer, of ethylene units.

5. The multilayer film as claimed in any one of claims 1 to 4, **characterized in that** the layer (a) respectively layer (c) comprises at most 15% by weight, based on the total weight of the layer (a) respectively layer (c), of at least one propylene homopolymer or ethylene homopolymer, whereby the polymer components of the layer (a) respectively layer (c) in each case always add up to 100% by weight.

6. The multilayer film as claimed in any one of claims 1 to 5, **characterized in that** the layer (b) is based on at least one α,β-unsaturated olefin having from 1 to 8 carbon atoms and on a C₁₋C₆-alkyl (meth)acrylate, preferably on at least one ethylene/ethyl (meth)acrylate copolymer, one ethylene/propyl (meth)acrylate copolymer or at least one ethylene/butyl (meth)acrylate copolymer, particularly preferably on at least one ethylene/butyl acrylate copolymer.

7. The multilayer film as claimed in any one of claims 1 to 6, **characterized in that** the layer (d) respectively layer (e) is based, in each case, on at least one modified, thermoplastic olefin homo-or copolymer.

8. The multilayer film as claimed in any one of claims 1 to 7, **characterized in that** it was produced by a blown-film-co-extrusion process.

9. The multilayer film as claimed in any one of claims 1 to 8, **characterized in that** at least one surface layer of the multilayer film has, in order to provide release properties, a cured polysiloxane coating preferably with an embossed surface topography or preferably an unembossed, uneven surface structure due to foaming.

10. The use of a multilayer film as claimed in any one of claims 1 to 9 as removable release and/or protective film.

11. A removable release and/or protective film as claimed in any one of claims 1 to 9 for adhesive or self-adhesive products.

12. The removable release and/or protective film as claimed in claim 11, **characterized in that** the product is a sealing composition, an adhesive tape or a label.

13. The removable release and/or protective film as claimed in claim 11 or 12, **characterized in that** the sealing composition is a bitumen composition for a sealing sheet, preferably for the roof sealing.

14. A sealing sheet, preferably a bitumen sealing sheet with a multilayer film as claimed in any one of claims 1 to 9 as removable release and/or protective film.

## Revendications

1. Feuille multicouche présentant une résistance à la propagation d'une déchirure d'au moins 300 mN, mesurée selon le procédé d'Elmendorf (ISO 6383-2) à une épaisseur totale de la feuille multicouche de 45 µm, et un comportement de retrait ≤ 1% selon la norme DIN 53377 à un temps de séjour de 1 min dans un bain d'huile à 120°C (tant dans le sens machine (MD) que dans le sens transversal (CD)) présentant des propriétés antiadhésives comprenant
(a) une couche comme une couche de surface, à base d'au moins un copolymère de propylène et le cas échéant d'au moins un homopolymère d'oléfine
(b) au moins une couche interne à base d'au moins un copolymère d'oléfine/(méth)acrylate d'alkyle
(c) une couche comme deuxième couche de surface, à base d'au moins un copolymère de propylène et le cas échéant d'au moins un homopolymère d'oléfine et
le cas échéant à chaque fois une couche (d) ou (e) disposée entre la couche (a) et la couche (b) ou entre la couche (b) et la couche (c) comme couche de promoteur d'adhérence, **caractérisée en ce qu'**au moins une des couches de surface de la feuille multicouche présente un apprêt antiadhésif.

2. Feuille multicouche selon la revendication 1, **caractérisée en ce que** la couche (a) et la couche (c) présentent une structure de couche identique, de préférence une épaisseur de couche identique et/ou une composition identique des composants polymères.

3. Feuille multicouche selon la revendication 1 ou 2, **caractérisée en ce que** la couche (a) et la couche (c), identiques ou différentes l'une de l'autre, présentent au moins un copolymère de propylène et d'une oléfine α,ß-insaturée présentant de préférence 2 ou 4-8 atomes de carbone, de préférence au moins un copolymère d'éthylène-propylène.

4. Feuille multicouche selon l'une quelconque des revendications 1 à 3, **caractérisée en ce que** la couche (a) ou la couche (c) à base d'au moins un copolymère de propylène-éthylène, présente au plus 15% en poids, de préférence 1 à 10% en poids, de manière particulièrement préférée 5 à 10% en poids, à chaque fois par rapport au poids total du copolymère de propylène/éthylène, d'unités d'éthylène.

5. Feuille multicouche selon l'une quelconque des revendications 1 à 4, **caractérisée en ce que** la couche (a) ou la couche (c) présente au plus 15% en poids, par rapport au poids total de la couche (a) ou de la couche (c) en question, d'au moins un homopolymère de propylène ou homopolymère d'éthylène, la somme des composants polymères de la couche (a) ou de la couche (c) devant toujours valoir 100% en poids.

6. Feuille multicouche selon l'une quelconque des revendications 1 à 5, **caractérisée en ce que** la couche (b) est à base d'au moins une oléfine α,ß-insaturée comprenant 1-8 atomes de carbone et d'un (méth)acrylate de C₁-C₆-alkyle, de préférence à base d'au moins un copolymère d'éthylène/(méth)acrylate d'éthyle, d'un copolymère d'éthylène/(méth)acrylate de propyle, d'un copolymère d'éthylène/(méth)acrylate de butyle, de manière particulièrement préférée à base d'un copolymère d'éthylène/acrylate de butyle.

7. Feuille multicouche selon l'une quelconque des revendications 1 à 6, **caractérisée en ce que** la couche (d) ou la couche (e) est à chaque fois à base d'au moins un homopolymère ou copolymère oléfinique modifié, thermoplastique.

8. Feuille multicouche selon l'une quelconque des revendications 1 à 7, **caractérisée en ce qu'**elle a été préparée selon un procédé de soufflage-co-extension de feuille.

9. Feuille multicouche selon l'une quelconque des revendications 1 à 8, **caractérisée en ce qu'**au moins une couche de surface de la feuille multicouche présente, comme un apprêt antiadhésif, un revêtement durci de polysiloxane présentant de préférence une topographie de surface marquée en relief ou de préférence une structure de surface irrégulière, non marquée en relief, par moussage.

10. Utilisation d'une feuille multicouche selon l'une quelconque des revendications 1 à 9 comme feuille de séparation et/ou de protection amovible.

11. Feuille de séparation et/ou de protection amovible selon l'une quelconque des revendications 1-9 pour des produits adhésifs ou autoadhésifs.

12. Feuille de séparation et/ou de protection amovible selon la revendication 11, **caractérisée en ce que** le produit est un mastic, une bande adhésive ou une étiquette.

13. Feuille de séparation et/ou de protection amovible selon la revendication 11 ou 12, **caractérisée en ce que** le mastic est une masse de bitume pour une bande d'étanchéité, de préférence pour le recouvrement d'un toit.

14. Bande d'étanchéité, de préférence bande d'étanchéité en bitume présentant une feuille multicouche selon l'une quelconque des revendications 1 à 9 comme feuille de séparation et/ou de protection amovible.
